# FASCICULE DE BREVET EUROPEEN

(11) **EP 2 943 675 B1**
(45) Date de publication et mention de la délivrance du brevet: **13.05.2020**
(21) Numéro de dépôt: 14703133.0
(22) Date de dépôt: 10.01.2014
(51) Int. Cl.: F02K 9/46, F02K 9/60

(54) **CIRCUIT D'ALIMENTATION EN ERGOL**
TREIBMITTELZUFUHRKREISLAUF
PROPELLANT SUPPLY CIRCUIT

(30) Priorité: 11.01.2013 FR 1350239
(43) Date de publication de la demande: 18.11.2015
(73) Titulaire: ArianeGroup SAS, 75015 Paris (FR)
(72) Inventeur: VUILLAMY, Didier, F-76230 Quincampoix (FR); ROZ, Gérard, F-27510 Pressagny l'Orgueilleux (FR)
(74) Mandataire: Cabinet Beau de Loménie
(86) Numéro de dépôt international: PCT/FR2014/050046
(87) Numéro de publication internationale: WO 2014/108650

(56) Documents cités:
- EP-A1- 1 241 341
- FR-A1- 2 921 979
- FR-A1- 2 976 626
- US-A- 3 049 870
- US-A- 4 771 600
- US-A- 5 551 230
- US-B1- 7 784 268
- US-B1- 7 784 269

## Description

### Arrière-plan de l'invention

La présente invention concerne le domaine aérospatial, et en particulier celui des engins propulsés par moteurs-fusées.

Dans la description qui suit les termes "amont" et "aval" sont définis par rapport au sens de circulation normal des ergols dans les circuits d'alimentation d'un moteur-fusée.

Un des principaux soucis dans ce domaine est celui d'obtenir un refroidissement satisfaisant des sources de chaleur à bord. En effet, pour assurer leur fonctionnement optimal, il peut être nécessaire de maintenir la température de fonctionnement de certains dispositifs générateurs de chaleur, comme par exemple des piles à combustible, mais aussi des batteries ou des circuits électroniques, dans une plage relativement étroite. Or, les contraintes spécifiques au domaine peuvent rendre très difficile l'évacuation de la chaleur générée par ces dispositifs. En particulier dans le vide spatial, les voies d'évacuation de chaleur sont extrêmement restreintes. Ainsi, la publication de demande de brevet européen EP 1 241 341 A1 propose l'utilisation d'un ergol pour évacuer de la chaleur. Le document FR2232685 A1 divulgue un propulseur-fusée à propergol liquide connu de l'art antérieur.

### Objet et résumé de l'invention

La présente description vise à remédier à ces inconvénients. En particulier, on vise à proposer un ensemble comprenant un réservoir pour un premier ergol liquide et un circuit d'alimentation d'un moteur-fusée en au moins le premier ergol liquide, qui permette en même temps d'assurer le refroidissement d'au moins une source de chaleur.

Ce but est atteint grâce au fait que ce circuit d'alimentation, qui comprend au moins un premier échangeur de chaleur apte à être connecté à un circuit de refroidissement de l'au moins une source de chaleur, comprend en outre, en aval dudit premier échangeur de chaleur, un branchement traversant un deuxième échangeur de chaleur, et à ce que le réservoir, qui est connecté audit circuit d'alimentation en amont du premier échangeur de chaleur, l'est aussi audit branchement, en aval du deuxième échangeur de chaleur. Ainsi, en fonctionnement, la chaleur générée par la source de chaleur peut être évacuée, à travers le circuit de refroidissement et ledit premier échangeur de chaleur, vers l'ergol liquide dans le circuit d'alimentation du moteur-fusée. Contrairement au refroidissement régénératif d'une paroi de chambre propulsive de moteur-fusée, dans lequel la chambre propulsive est directement refroidie par l'ergol, ce refroidissement s'effectue donc avec, comme intermédiaire, un circuit de refroidissement interposé entre la source de chaleur et l'ergol circulant à travers le circuit d'alimentation, ce qui permet une éventuelle régulation plus précise de la température de la source de chaleur par l'intermédiaire d'une éventuelle régulation du débit de fluide de refroidissement dans le circuit de refroidissement. Le deuxième échangeur de chaleur peut assurer le passage à l'état gazeux d'un débit du premier ergol dérivé à travers ledit branchement, même quand la puissance calorifique dudit dispositif générateur de chaleur est, seule, insuffisante pour cela. Ce débit gazeux peut ainsi être utilisé, par exemple, pour maintenir la pression interne d'un réservoir fournissant le circuit d'alimentation avec le premier ergol pendant sa vidange. Pour cela, ledit branchement peut déboucher sur une partie haute de ce réservoir du premier ergol pour la réinjection du premier ergol à l'état gazeux.

L'ensemble peut comprendre en outre une source de chaleur équipée d'un circuit de refroidissement connecté audit premier échangeur de chaleur du circuit d'alimentation. La source de chaleur peut notamment être une pile à combustible. Une telle pile à combustible peut par exemple être alimentée par les mêmes ergols que le moteur-fusée afin de générer de l'électricité pour les systèmes embarqués d'un engin propulsé par le moteur-fusée. Alternativement, toutefois, d'autres types de sources de chaleur embarquées, comme par exemple des batteries ou des circuits électroniques, peuvent être refroidies de la même manière.

La présente description concerne aussi un engin comprenant un moteur-fusée avec ledit circuit d'alimentation et un dispositif embarqué générateur de chaleur avec un circuit de refroidissement connecté audit premier échangeur de chaleur du circuit d'alimentation. Cet engin peut être, par exemple, un étage de lanceur spatial, un satellite, ou tout autre type de véhicule propulsé par un moteur-fusée à ergols liquides.

Suivant un deuxième aspect, ledit circuit d'alimentation peut notamment comprendre aussi un réservoir tampon pour ledit premier ergol liquide, contenant ledit premier échangeur de chaleur, permettant ainsi d'augmenter la puissance calorifique absorbée, même quand le circuit d'alimentation est fermé et ledit premier ergol ne circule pas.

Suivant un troisième aspect, ledit premier ergol liquide peut notamment être un liquide cryogénique, et en particulier de l'hydrogène liquide, offrant ainsi un refroidissement encore plus efficace grâce à sa basse température.

Suivant un quatrième aspect, ledit circuit d'alimentation peut comprendre une pompe en amont dudit premier échangeur de chaleur, afin d'assurer la circulation du premier ergol. Cette pompe peut être, par exemple, une pompe électrique ou une turbopompe. Toutefois, alternativement, le circuit d'alimentation pourrait être configuré de manière à assurer la circulation du premier ergol par d'autres moyens, comme par exemple par pressurisation d'un réservoir en amont.

Suivant un cinquième aspect, ledit deuxième échangeur de chaleur peut être intégré dans un réservoir pour un deuxième ergol liquide, de manière à pouvoir chauffer le premier ergol liquide par transfert de chaleur du deuxième ergol liquide. En particulier quand le deuxième ergol liquide présente une température d'ébullition sensiblement plus élevée que le premier ergol liquide (par exemple, quand le premier ergol liquide est de l'hydrogène liquide et le deuxième ergol liquide est de l'oxygène liquide) ceci permet non seulement d'assurer le passage en phase gazeuse du premier ergol dans le deuxième échangeur de chaleur, mais simultanément de refroidir le deuxième ergol. Ce refroidissement du deuxième ergol permet d'éviter la cavitation dans une pompe en aval de ce deuxième réservoir. La présente description concerne donc aussi un ensemble de ce circuit d'alimentation et d'un réservoir pour un deuxième ergol liquide, contenant ledit deuxième échangeur de chaleur.

Finalement, la présente description concerne aussi un procédé de refroidissement d'une source de chaleur, dans lequel un circuit de refroidissement de ladite source de chaleur transfère de la chaleur générée par la source de chaleur vers un premier ergol liquide d'un moteur-fusée à travers un premier échangeur de chaleur d'un circuit d'alimentation dudit moteur-fusée en au moins ledit premier ergol liquide. Après avoir absorbé cette chaleur dans le premier échangeur de chaleur, une partie du débit du premier ergol liquide peut être ensuite dérivée à travers le deuxième échangeur de chaleur, dans lequel elle absorbera de la chaleur d'un deuxième ergol, pour atteindre l'état gazeux avant d'être réinjectée dans le réservoir du premier ergol alimentant le circuit d'alimentation. Comme spécifié ci-dessus, ce premier échangeur de chaleur peut être contenu dans un réservoir-tampon du circuit d'alimentation du premier ergol, et la source de chaleur peut être une pile à combustible.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique d'un engin suivant un premier mode de réalisation de l'invention ; et
- la figure 2 est une vue schématique d'un engin suivant un deuxième mode de réalisation de l'invention

### Description détaillée de l'invention

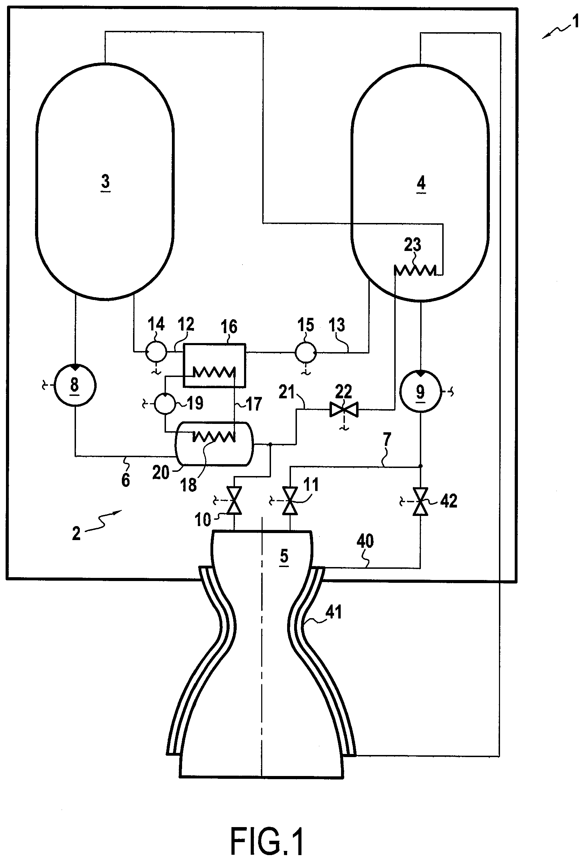

Un engin 1, pouvant être, par exemple, un étage d'un lanceur spatial, est illustré schématiquement sur la figure 1. Pour sa propulsion, cet engin 1 comprend un moteur-fusée 2 à ergols liquides, avec un premier réservoir 3 pour un premier ergol, un deuxième réservoir 4 pour un deuxième ergol, une chambre propulsive 5 pour la combustion d'un mélange des deux ergols et l'accélération des gaz de combustion de ce mélange, un premier circuit d'alimentation 6 relié au premier réservoir 3 et à la chambre propulsive 5 afin d'amener le premier ergol du premier réservoir 3 à la chambre propulsive 5, et un deuxième circuit d'alimentation 7 relié au deuxième réservoir 4 à la chambre propulsive 5 afin d'amener le deuxième ergol du deuxième réservoir 4 à la chambre propulsive 5. Ces premier et deuxième ergols peuvent être des ergols cryogéniques tels que l'hydrogène et l'oxygène liquide. Chacun des circuits d'alimentation 6,7 comprend une pompe 8,9 pour assurer la circulation de l'ergol respectif à travers chaque circuit d'alimentation 6,7, et des vannes de sortie 10,11 pour ouvrir et fermer l'écoulement des ergols vers la chambre propulsive 5. Ces pompes 8,9 peuvent être, par exemple, des pompes électriques, ou bien des turbopompes.

En outre, l'engin 1 comprend également, pour l'alimentation électrique d'équipements embarqués, une pile à combustible 16 embarquée, adaptée à générer de l'électricité suite à une réaction chimique entre les deux ergols et connectée à des circuits d'alimentation 12,13 afin d'être alimentée en ces deux ergols. Chacun de ces circuits 12,13 comprend une micropompe 14,15 permettant de réguler le débit d'ergol fourni à la pile à combustible 16. Grâce à la pression interne des réservoirs 3,4, les micropompes 14,15 peuvent toutefois être éventuellement substituées par des vannes à débit variable, la pression interne des réservoirs 3,4 pouvant alors suffire à assurer l'écoulement des ergols vers la pile à combustible 16.

La pile à combustible 16 est en outre pourvue d'un circuit de refroidissement 17 contenant un fluide de refroidissement tel que, par exemple, de l'hélium, et connecté à un échangeur de chaleur 18 intégré dans un réservoir-tampon 20 du circuit d'alimentation 6 du premier ergol. Dans l'engin 1 illustré, la circulation de ce fluide de refroidissement dans le circuit de refroidissement 17 peut être impulsée par, et régulée à travers de, un dispositif de circulation forcée à débit variable 19, lequel, dans le mode de réalisation illustré, prend la forme d'un ventilateur. Toutefois, d'autres alternatives peuvent être envisagées tant pour impulser la circulation du fluide de refroidissement que pour la réguler. Ainsi, l'impulsion du fluide de refroidissement pourrait être assurée par un thermosiphon, et la régulation de débit par au moins une vanne à débit variable.

En aval du réservoir-tampon 20, le circuit d'alimentation 6 comprend aussi un branchement 21 de retour vers le sommet du premier réservoir 3 à travers une vanne à débit variable 22, et un deuxième échangeur de chaleur 23 qui est intégré dans la base du deuxième réservoir 4 à proximité de sa connexion au deuxième circuit d'alimentation 7. Le deuxième circuit 7 comprend aussi, en aval de la pompe 9, un branchement 40 de retour vers le sommet du deuxième réservoir 4, traversant un autre échangeur de chaleur 41 disposé autour de la chambre propulsive 5 de manière à être chauffé par rayonnement ou par conduction par celle-ci. Ce branchement 40 comprend aussi, en amont de l'échangeur de chaleur 41, une vanne 42, pouvant être une vanne de débit variable, permettant ainsi une régulation précise du débit à travers le branchement 40.

En fonctionnement, après l'ouverture des vannes 10 et 11, les pompes 8,9 impulsent à travers les circuits d'alimentation 6,7 les ergols alimentant la chambre propulsive 5. La chaleur générée par cette pile à combustible 16, qui est simultanément alimentée en ergols à travers les circuits d'alimentation 12,13 afin de générer de l'électricité, est évacuée, à travers le circuit de refroidissement 17 et l'échangeur de chaleur 18, vers le premier ergol circulant à travers le circuit d'alimentation 6. En particulier, dans le mode de réalisation décrit, la très basse température de ce premier ergol, quand il est un liquide cryogénique, permet une évacuation extrêmement efficace de cette chaleur.

Grâce au réservoir-tampon 20, il est possible d'évacuer vers le premier ergol une plus grande quantité de chaleur émise par la pile de combustible 16, et ceci même quand les vannes 10,11 sont fermées et les pompes 8,9 sont à l'arrêt. Un volume Vₜ de 30 l d'hydrogène liquide dans le réservoir-tampon 20 peut ainsi absorber la quantité de chaleur correspondant à une puissance calorifique P_{c} de 100 W pendant une heure avec une montée en température ΔT d'uniquement 17 K de l'hydrogène liquide.

Après son échauffement par l'échangeur de chaleur 18, une partie du débit du premier ergol évacué du premier réservoir 3 à travers le premier circuit d'alimentation 6 est dérivée à travers le branchement 21 vers le deuxième échangeur de chaleur 23, dans lequel elle absorbe une puissance calorifique supplémentaire du deuxième ergol, plus chaud, passant ainsi à l'état gazeux, avant d'être réinjectée au sommet du premier réservoir 3 pour ainsi maintenir sa pression interne pendant sa vidange. Si le premier ergol est de l'hydrogène liquide et le deuxième ergol est de l'oxygène liquide, la différence de température entre leurs points d'ébullition respectifs, à pression atmosphérique, est de presque 70 K, ce qui permet un transfert de chaleur plus que suffisant pour assurer la vaporisation de l'hydrogène liquide avant que leurs températures s'égalisent, et ceci même pour un débit d'hydrogène liquide important par rapport au volume d'oxygène liquide contenu dans le deuxième réservoir. Simultanément, cette absorption de chaleur par le premier ergol dans le deuxième échangeur de chaleur 23 refroidit le deuxième ergol, ce qui permet de diminuer la pression de saturation du deuxième ergol alimentant la pompe 9, de manière à y éviter des phénomènes de cavitation. Ceci permet aussi de laisser plus largement fluctuer la pression et la température de ce deuxième ergol dans le deuxième réservoir 4.

En même temps, pour maintenir la pression dans le deuxième réservoir 4, une partie du débit du deuxième ergol extrait du deuxième réservoir 4 à travers le deuxième circuit 7 est dérivée à travers le branchement 40 et chauffé dans l'échangeur 41 par le rayonnement thermique de la chambre propulsive 5 ou par conduction , de telle manière qu'il passe en phase gazeuse avant d'être réinjecté dans le deuxième réservoir 4, afin d'y maintenir la pression interne. Cette dérivation de débit est régulée par la vanne 42.

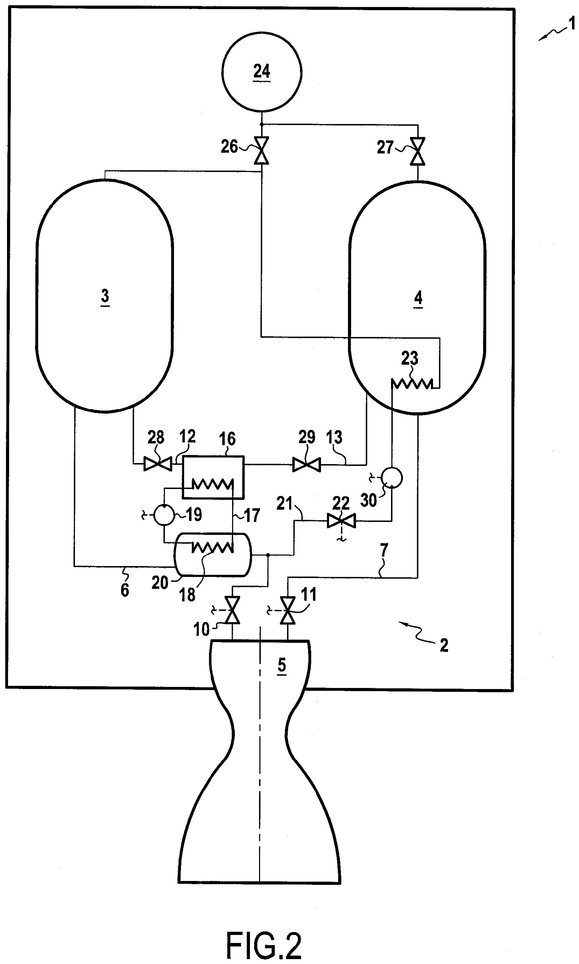

Toutefois, alternativement aux pompes 8 et 9 de ce premier mode de réalisation, la circulation des ergols vers la chambre propulsive peut être assurée par d'autres moyens comme, par exemple, par pressurisation des réservoirs. Ainsi, dans un deuxième mode de réalisation illustré sur la figure 2, ces pompes sont remplacées par un réservoir 24 de gaz pressurisé, par exemple d'hélium, connecté aux réservoirs 3,4 d'ergols à travers de vannes 26,27 respectives. Ainsi, en fonctionnement, la pression de l'hélium du réservoir de gaz pressurisé 24 pousse les ergols, à travers leurs circuits d'alimentation 6,7 respectifs, vers la chambre propulsive 5. La pressurisation des ergols dans les réservoirs 3, 4 permet également de s'affranchir de micropompes pour l'alimentation en ergols de la pile à combustible 16, alimentation qui est régulée dans ce mode de réalisation par des vannes 28,29 à débit variable dans les circuits 12,13. Finalement, afin de permettre la réinjection en phase gazeuse au sommet du premier réservoir 3 de l'ergol dérivé à travers le branchement 21, ce branchement 21 comprend un dispositif de circulation forcée 30, plus spécifiquement sous forme d'un ventilateur ou d'une pompe. Les autres éléments de cet engin 1 sont essentiellement équivalents à ceux du premier mode de réalisation, et reçoivent les mêmes chiffres de référence.

La présente invention a été décrite en se référant à des exemples de réalisation spécifiques. Dans une variante du deuxième mode de réalisation, l'engin pourrait aussi comprendre un branchement de réinjection du deuxième ergol en phase gazeuse dans le deuxième réservoir, comme dans le premier mode de réalisation, avec un dispositif de circulation forcée de ce deuxième ergol en phase gazeuse. Par conséquent, la description et les dessins doivent être considérés dans un sens illustratif plutôt que restrictif.

## Revendications

1. Ensemble comprenant un réservoir (3) pour un premier ergol liquide et un circuit d'alimentation (6) d'un moteur-fusée (2) en au moins le premier ergol liquide, le circuit d'alimentation (6) comprenant au moins un premier échangeur de chaleur (18) apte à être connecté à un circuit de refroidissement (17) d'au moins une source de chaleur, l'ensemble étant **caractérisé en ce que** le circuit d'alimentation (6) comprend en outre, en aval dudit premier échangeur de chaleur (18), un branchement (21) traversant un deuxième échangeur de chaleur (23), et **en ce que** ledit réservoir (3) est connecté audit circuit d'alimentation (6) en amont dudit premier échangeur de chaleur (18), et aussi audit branchement (21) en aval dudit deuxième échangeur de chaleur (23).

2. Ensemble suivant la revendication 1, dans lequel le circuit d'alimentation (6) comprend un réservoir-tampon (20) pour ledit premier ergol liquide, dans lequel ledit premier échangeur de chaleur (18) est intégré.

3. Ensemble suivant l'une quelconque des revendications précédentes, dans lequel ledit premier ergol liquide est un liquide cryogénique.

4. Ensemble suivant la revendication 3, dans lequel ledit premier ergol liquide est de l'hydrogène liquide.

5. Ensemble suivant l'une quelconque des revendications précédentes, dans lequel le circuit d'alimentation (6) comprend une pompe (8) en amont dudit premier échangeur de chaleur (18).

6. Ensemble suivant l'une quelconque des revendications 1 à 5 et un réservoir (4) pour un deuxième ergol liquide, dans lequel ledit deuxième échangeur de chaleur (23) est intégré.

7. Ensemble suivant l'une quelconque des revendications 1 à 6, comprenant en outre une source de chaleur équipée d'un circuit de refroidissement (17) connecté audit premier échangeur de chaleur (18) du circuit d'alimentation (6).

8. Ensemble suivant la revendication 7, dans lequel ladite source de chaleur est une pile à combustible (16).

9. Engin (1) comprenant un moteur-fusée (2) avec au moins un ensemble suivant l'une quelconque des revendications 1 à 8.

## Patentansprüche

1. Einheit, umfassend einen Tank (3) für einen ersten Flüssigtreibstoff und einen Zufuhrkreislauf (6) eines Raketentriebwerks (2) mit mindestens dem ersten Flüssigtreibstoff, wobei der Zufuhrkreislauf (6) mindestens einen ersten Wärmetauscher (18) umfasst, der dafür geeignet ist, mit einem Kühlkreislauf (17) mindestens einer Wärmequelle verbunden zu werden, wobei die Einheit **dadurch gekennzeichnet ist, dass** der Zufuhrkreislauf (6) außerdem, stromabwärts von dem einen ersten Wärmetauscher (18), eine Verzweigung (21) umfasst, die einen zweiten Wärmetauscher (23) durchquert, und dadurch, dass der Tank (3) mit dem Zufuhrkreislauf (6) stromaufwärts von dem genannten ersten Wärmetauscher (18) verbunden ist, und auch mit der genannten Verzweigung (21) stromabwärts von dem zweiten Wärmetauscher (23).

2. Einheit nach Anspruch 1, wobei der Zufuhrkreislauf (6) einen Puffertank (20) für den genannten ersten Flüssigtreibstoff umfasst, in dem der genannte erste Wärmetauscher (18) integriert ist.

3. Einheit nach einem der vorhergehenden Ansprüche, wobei der erste Flüssigtreibstoff eine kryogene Flüssigkeit ist.

4. Einheit nach Anspruch 3, wobei der erste Flüssigtreibstoff flüssiger Wasserstoff ist.

5. Einheit nach einem der vorhergehenden Ansprüche, wobei der Zufuhrkreislauf (6) eine Pumpe (8) stromaufwärts von dem genannten ersten Wärmetauscher (18) umfasst.

6. Einheit nach einem der Ansprüche 1 bis 5 und Tank (4) für einen zweiten Flüssigtreibstoff, in dem der zweite Wärmetauscher (23) integriert ist.

7. Einheit nach einem der Ansprüche 1 bis 6, außerdem umfassend eine Wärmequelle, die mit einem Kühlkreislauf (17) ausgestattet ist, der mit dem ersten Wärmetauscher (18) des Zufuhrkreislaufs (6) verbunden ist.

8. Einheit nach Anspruch 7, wobei die Wärmequelle eine Brennstoffzelle (16) ist.

9. Antrieb (1), umfassend ein Raketentriebwerk (2) mit mindestens einer Einheit nach einem der Ansprüche 1 bis 8.

## Claims

1. Assembly comprising a tank (3) for a first liquid propellant and a feed circuit (6) for feeding a rocket engine (2) at least with the first liquid propellant, wherein the feed circuit (6) includes at least one first heat exchanger (18) suitable for being connected to a cooling circuit (17) for cooling at least one source of heat, the circuit being **characterized in that** the feed circuit (6) further comprises, downstream from said first heat exchanger (18), a branch (21) passing through a second heat exchanger (23), and **in that** said tank (3) is connected to said feed circuit (6) upstream from said first heat exchanger (18), and also to said branch (21) downstream from said second heat exchanger (23).

2. An assembly according to claim 1, wherein the feed circuit (6) comprises a buffer tank (20) for said first liquid propellant, said first heat exchanger (18) being incorporated in the buffer tank (20).

3. An assembly according to any preceding claim, wherein said first liquid propellant is a cryogenic liquid.

4. An assembly according to claim 3, wherein said first liquid propellant is liquid hydrogen.

5. An assembly according to any preceding claim, wherein the feed circuit (6) includes a pump (8) upstream from said first heat exchanger (18).

6. An assembly according to any one of claims 1 to 5 and a tank (4) for a second liquid propellant, said second heat exchanger (23) being incorporated in the tank (4).

7. An assembly according to any one of claims 1 to 6, further comprising a heat source provided with a cooling circuit (17) connected to said first heat exchanger (18) of the feed circuit (6).

8. An assembly according to claim 7, wherein said heat source is a fuel cell (16).

9. A vehicle (1) comprising a rocket engine (2) with at least an assembly according to any one of claims 1 to 8.
